# EUROPEAN PATENT SPECIFICATION

(11) **EP 0 540 563 B1**
(45) Date of publication and mention of the grant of the patent: **11.10.1995**
(21) Application number: 91912920.5
(22) Date of filing: 16.07.1991
(51) Int. Cl.: C02F 3/08

(54) **WASTE WATER TREATMENT PLANT**
VORRICHTUNG FÜR DIE ABWASSERBEHANDLUNG
INSTALLATION DE TRAITEMENT D'EAUX USEES

(30) Priority: 20.07.1990 GB 9016020
(43) Date of publication of application: 12.05.1993
(73) Proprietor: SEVERN TRENT WATER LIMITED, Birmingham, B26 3PU (GB)
(72) Inventor: BLACK, Donald, William 62 Lime Avenue, Warwickshire CV32 7DF (GB); FINDLAY, George, Eric 336 Station Road Knowle, West Midlands B93 0ET (GB); GROSVENOR, Stephen, Louis, Surrey TW9 14S (GB)
(74) Representative: Russell, Paul Sidney
(86) International application number: GB9101177
(87) International publication number: WO9201636

(56) References cited:
- BE-A- 752 285
- DE-A- 1 459 511
- DE-A- 1 584 911
- GB-A- 2 151 497

## Description

The present invention relates to waste water treatment plant of the kind providing a first treatment stage in which an initial separation between liquid and solid constituents of the waste water is effected in one or more primary settlement tanks, and a second stage in which rotary contactors mounted over the one or more primary settlement tanks are employed to enable biomass to be exposed alternately to the waste water and to air for digestion of pollutants from the waste water by microorganisms.

A known plant of this type is described in GB-A-2151497. That plant includes a primary settlement tank into which incoming waste water is passed for the first stage of treatment, a so-called biozone tank, to which water is fed from the primary settlement tank, for the second stage of treatment, and a secondary settlement tank to which water is fed from the biozone tank for the third stage. Within the biozone tank there are a plurality of sets of slowly-rotating contactor discs which pick up waste water and expose it to air. In that known arrangement all of the sets of discs are supported on a single shaft driven by a single motor. Solid matter which separates from the waste water in the initial separation falls as a sludge to the bottom of the primary separation tank, and must be periodically removed from the tank.

GB-A-1333061 discloses a waste water treatment plant in which a rotary contactor is contained within a tank having upper and lower compartments. The upper compartment accommodates the rotor and has its lower portion defined by two downwardly convergent walls, the lower edge of one wall being spaced from the other wall. Sludge from the rotor falls by gravity into the convergent section and through the space between the walls into a receiving portion of the lower compartment.

A problem which arises with known plant is that accumulated sludge which settles in the primary settlement tank cannot be removed without interfering with the process conditions in the tank. This can mean that for a time the plant does not meet required standards of operation. The sludge removal can also be an awkward task, owing to confined circumstances for access around the biozone tank and rotary contactor.

The present invention is characterised in that the plant further comprises one or more permanently-sited sludge tanks positioned adjacent to the one or more settlement tanks and conveying means interconnecting the settlement and sludge tanks whereby sludge which settles within the one or more primary settlement tanks becomes transferred to the one or more sludge tanks.

With this arrangement sludge can be removed from the primary settlement tanks automatically and stored in the sludge storage tank(s) for subsequent removal. The sludge storage tanks(s) may be made sufficiently large for emptying to be required only infrequently. Disturbance of the process conditions within the settlement tanks be kept to a minimum.

The conveying means may comprise one or more pumps to transfer sludge to the or each sludge storage tank. The operation of the pump(s) may be controlled automatically.

The floor of the or each primary settlement tank preferably has benching to urge the sludge towards an entry to the conveying the transfer means.

The sludge storage tank or tanks may be formed as a single tank or as a plurality of interconnected compartments.

The plant may be of modular construction to provide flexibility, allowing for adaptation to suit a range of sizes of community. Each module can comprise a primary settlement tank and a biozone tank and associated rotary contactor. This simplifies production because plants of various capacities can be constructed from a number of identical modules perhaps two or three, the number chosen being appropriate to the capacity required of the plant.

The biozone tanks may be accommodated within upper portions of respective primary settlement tanks, the flow of waste water through the biozone tanks in the second stage of treatment being in the opposite direction to flow through the successive primary settlement tanks in the first stage of treatment.

Each module may also form a sludge tank, or a portion of a larger tank, to which sludge which settles within its associated primary settlement tank can be transferred. Conveying means enabling the sludge to be passed from the primary settlement tanks to the sludge tanks may comprise one or more pumps; preferably there is one pump associated with each settlement tank, so that the tanks can be pumped out independently of one another. Benching within the settlement tanks can be arranged to encourage the sludge to collect in one or more collection zones of the tanks from which the conveying means draws the sludge.

The plant may provide a third stage of treatment in which residual solids are permitted to settle out from the liquid phase of the waste water in one or more secondary settlement tanks after completion of the second stage of treatment.

For the second treatment stage the plant may comprise at least two biozone tanks through which waste water which has been through the first stage passes successively, each tank accommodating an independently driven rotary contactor unit mounted to rotate about an axis extending transversely of the overall direction of flow through the tank.

In the event of one rotary contactor unit failing the remaining rotary contactor(s) can remain in operation so that the entire plant need not necessarily be closed down. Furthermore, transverse mounting of the rotary contactors facilitates the use of a modular construction.

Each rotary contactor unit preferably is provided with its own drive motor controllable independently from the other unit or units. Each rotary contactor unit may be provided with a sensor to monitor rotation, signals from the sensor being used to alert an operator or (automatic controls) of a fault in a unit.

An embodiment of the invention will now be described in detail, by way of example, with reference to the accompanying drawings in which:
Figure 1 is a sectional view in elevation of a treatment plant according to the invention, three biozones of the plant being shown in different stages of assembly;
Figure 2 is a plan view of the treatment plant shown in Figure 1;
Figure 3 is a section through a sludge storage tank of the treatment plant shown in Figure 1;
Figure 4 is an end view of a rotary biological contactor unit; and
Figure 5 is a side view of the rotary biological contactor unit.

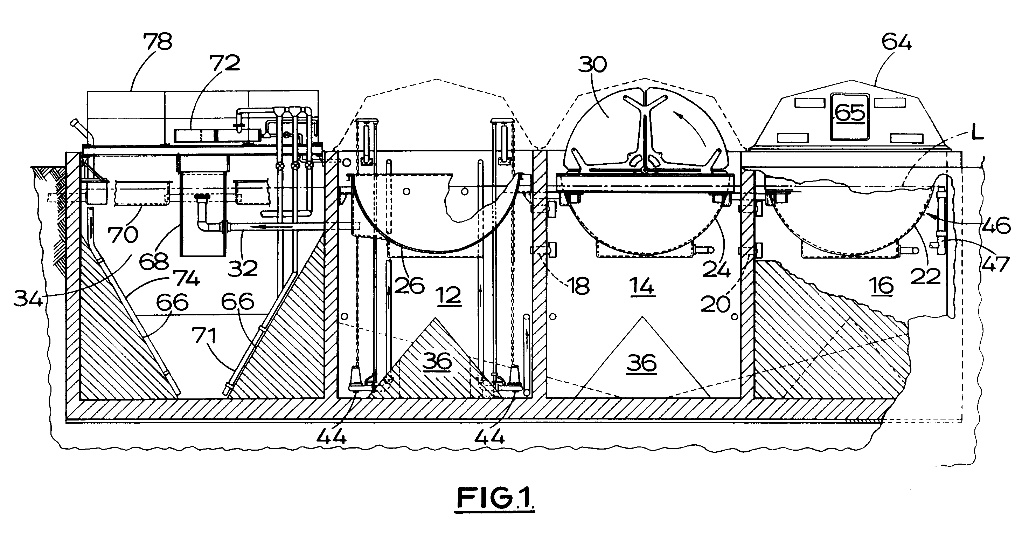

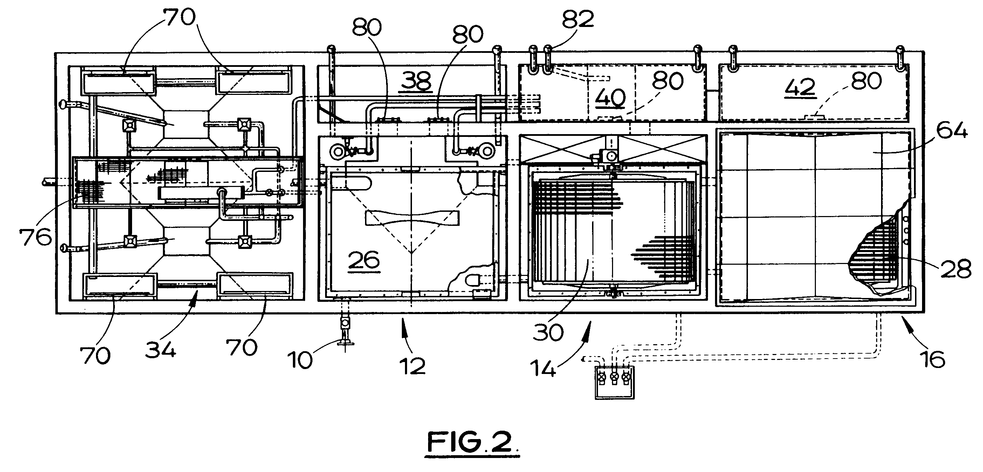

Referring to Figures 1 and 2, a waste water treatment plant has first, second and third primary settlement tanks 12, 14, 16 arranged adjacent to one another in a row. First, second and third biozone tanks 22, 24, 26 are positioned, respectively, over the third, second and first primary settlement tanks 16, 14, 12, being accommodated within upper portions of the tanks for flow there through in the opposite direction to flow through the successive primary settlement tanks in the first stage of treatment. A secondary settlement tank 34 is placed adjacent to the first primary settlement tank 12 in line with the other two primary settlement tanks. First, second and third compartments 38, 40, 42 of a sludge storage tank are positioned, respectively, adjacent to the first, second and third primary settlement tanks 12, 14, 16.

The waste water treatment plant is supplied with raw sewage through an inlet coupling 10 which leads into the first primary settlement tank 12 where a first stage of treatment, initial separation of liquid and solid matter, commences. By horizontal flow, the waste water is conducted from the first primary settlement tank 12 through a dip pipe 18 to the second primary settlement tank 14 where the first stage of treatment continues, and then through a further dip pipe 20 to the third primary settlement tank 16 wherein the first stage of treatment is completed. The dip pipes 18 and 20 may be 300mm bore pipes situated 750mm below the top water line L. The dip pipe arrangement reduces the amount of suspended solids passing between the tanks.

Waste water passes from the third primary settlement tank 16 into the first biozone tank 22 for a second stage of treatment to commence. From there, the waste water flows through the second biozone tank 24 and then to the third biozone tank 26 where the second stage of treatment is completed. Each biozone tank 22, 24, 26 accommodates a respective rotary contactor unit 28, 30 (the third not being shown) to enable biomass to be accumulated which becomes exposed alternately to the waste water and to air, for digestion of pollutants from the waste water by microorganisms.

The waste water passes from the third biozone tank 26 through an inlet pipe 32 into the secondary settlement tank 34 for its third and final treatment stage, in which residual solids are permitted to settle out from the liquid phase of the treated waste water.

The inlet coupling 10 runs directly into the first primary settlement tank 12 through one of its side walls. The inlet coupling 10 may suitably comprise a 150mm bore pipe with a flanged connection. An optional baffle plate may be provided to direct the flow into the body of the tank 12.

Each primary settlement tank 12, 14, 16 is of rectangular shape with vertical side walls. The floor of the tank is benched to guide sludge which has settled out of the waste water towards the edges of the floor and into collection zones. The benching 36 is in the shape of a triangular prism running transversely of the row of primary settlement tanks, the end face of which that is nearest the associated sludge storage tank compartment being sloped downwards towards the sludge storage tank.

Each primary settlement tank is provided with conveying means enabling sludge which settles within the tank to become transferred to the sludge tank. The conveying means comprises in each case two centrifugal pumps 44 at the bottom of the benching structure to pump sludge from the collection zones of the tank to the middle compartment 40 of the sludge storage tank. Only one pump 44 may be needed in each tank, the second pump providing a spare Draw-off pipes (not shown) are also provided to allow for removal of sludge directly from the primary settlement tanks should any of the sludge pumps 44 fail.

The biozone tanks 22, 24, 26 are constructed of glass reinforced plastic (GRP). The mouth of each biozone tank is rectangular, the body being part-cylindrical to house a lower portion of its associated rotary contactor.

Waste water enters the first biozone tank 22 through a high-lever weir or orifice 46 in the wall of the tank. The interconnection between the biozone tanks may be made by any suitable means. For example, the connection may suitably comprise 150mm bore pipe couplings attached to fittings moulded into the tanks. The inlet and connection points to the biozone tanks 22, 24, 26 are positioned to give the longest flow path through the tanks. The flow may suitably be diagonally as viewed in plan (Figure 2), in a zig-zag arrangement through the tanks.

A pressure-equalizing device 47, comprising a floating ball check valve, is in communication with the three biozone tanks 22, 24, 26 at their undersides to allow outward flow to prevent bursting in the event of the primary settlement tanks being drained.

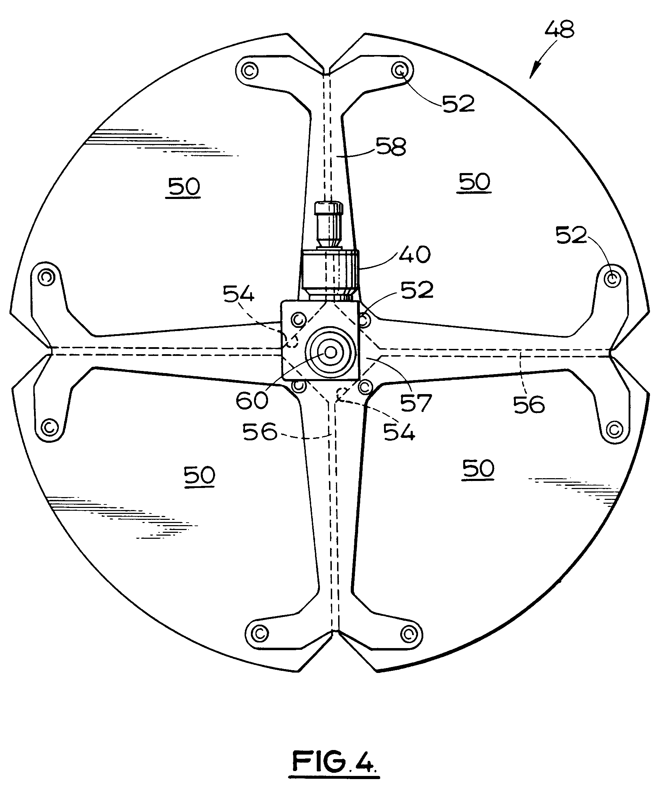

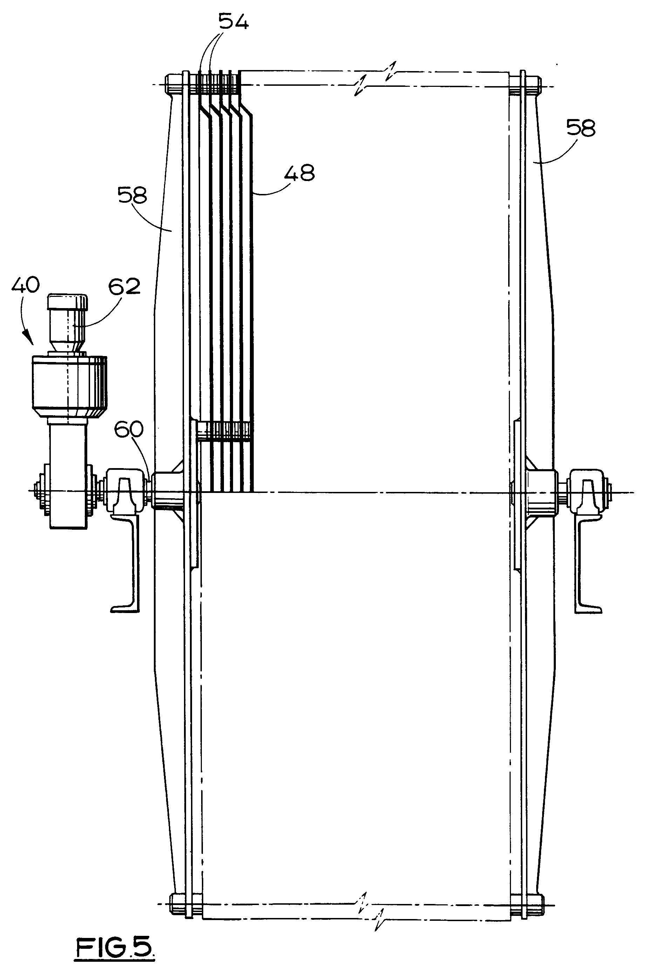

The three rotary contactor units 28,30 each comprise a plurality of contactor discs, to dip into the biozone tanks 22, 24, 26. Referring to Figures 4 and 5, the illustrated discs 48 are formed in segments 50. These segments 50 may suitably be quadrants and may be of vacuum formed plastics or any other suitable material. The segments 50 are ribbed to increase their surface area and stiffness.

Each segment 50 is mounted on three shafts 52, one shaft 52 at each corner of the segment 50. This prevents excessive distortion and bridging of the discs 48. The shafts 52 and the segments 50 are held positively in position by spacers 54. The segments 50 are held apart in the plane of each disc 48 (i.e. at their opposed edges) to form channels 56 through which waste water can flow. The shafts 52 act as stressed members, making support from a central shaft unnecessary and the segments 50 are truncated at their inner ends 54 to create a central passage 57 running parallel to the shafts 52. The peripheral shafts 52 have the added function of agitating the sewage in the biozone tank to prevent settlement of suspended solids; they are made from stainless steel. At each end of the rotary contactor unit the shafts 52 engage and locate into end spiders 58 carried on a central shaft 60 which runs in a self aligning bearing and passes through the central passage 57.

Each rotary contactor unit is made up of approximately sixty discs 48 to give a minimum effective surface area of 1470m². This gives a treatment capacity appropriate for a domestic population of 140. The immersed portion of the discs (i.e. within the biozone tanks) is equivalent to 40% of the effective area of the discs, the rotational axis being placed 320mm above the top water level.

It is to be noted that the three rotary contactor units are mounted to rotate about parallel axes extending transversely of the over all direction of flow through the tanks, instead of being in line with the general direction of flow as has been customary in the art hitherto. Furthermore, each rotary contactor unit is driven separately by an electric motor 62, via a gearbox, to give a rotational shaft speed of about 1 r.p.m. The use of one motor and gearbox unit per rotary contactor unit ensures that in the event of a breakdown of one of the rotary contactor units the others can keep operating and there is only partial loss of plant capacity. At the undriven end of the rotary contactor unit 30 a sensor is fitted to monitor rotation and to alert the operator to malfunction.

The rotary contactor units and biozone tanks are provided with GAP covers 64 each having a door 65 at each end. Cutout switches operate to stop rotation of the contactor unit should a door 65 be opened or if the cover 64 is removed. The covers 64 may be fitted with inspection ports permitting examination of the surfaces of the discs 48 without disturbing the treatment process and are well ventilated for cooling. Beneath the covers 64 there may be hand rails and walkways to provide a working surface for use when carrying out maintenance work.

The secondary settlement tank 34 is formed with concrete benching at its floor. The benching creates two sludge collection zones in the form of depressions in the shape of inverted truncated pyramids. (Alternatively, a single sludge collection zone may be formed for example, by providing downwardly converging side walls in the inner part of the tank). The minimum inclination of the walls 66 of the depressions is 55° to the horizontal and the full cross-sectional area of the tank occurs 1.5m below the top water level.

The secondary settlement tank is of vertical flow type. The inlet pipe 32 from the third biozone tank 26 empties upwards into a rectangular stilling box 68 positioned centrally in the tank 34 and is fitted with a flow restrictor to prevent the tank over filling. Outlet channels 70 with adjustable weirs are provided on both sides of the tank 34 to draw off the final effluent.

The cross-sectional area of the tank is selected to given an upward flow rate of 1m per hour at six times dry weather flow.

The secondary settlement tank 34 is fitted with a number of sludge collection pipes 71 and with an air lift or other pump 72. Sludge flows from the pump 72 back into the first primary tank 12 to re-seed the process. Additional pipes 74 run into the sludge collection points for removal of the sludge by tanker.

The secondary settlement tank 34 has a central walkway 76 and may be fitted with hand rails 78 or, depending on the location, may be completely covered.

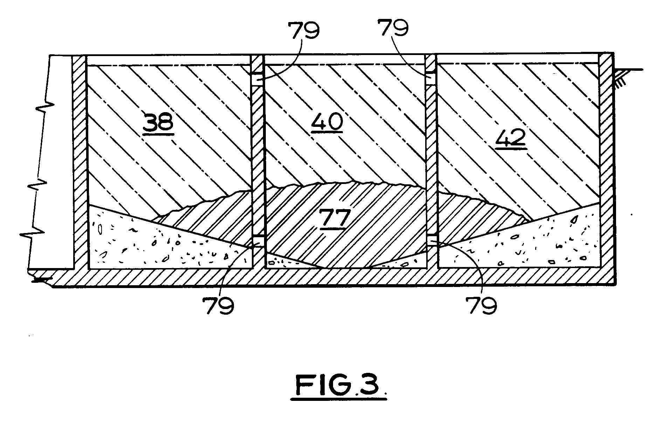

The sludge tank, shown also in Figure 3, is divided into three interconnected compartments 38, 40, 42. All sludge from the primary settlement tanks 12, 14, 16 is deposited into the middle one 40 of these compartments by the pumps 44. As shown in Figure 3, thefloors of the outer two compartments 38, 42 are sloped towards the middle compartment 40, and the slope is continued at the outer edges of the middle compartment 40. The slope encourages sludge 77 in the tank to accumulate in the middle compartment, and towards the inner edges of the outer tanks 38, 42.

Interconnection between the compartments is achieved by providing holes 79 in the interconnecting walls. At least some of the holes 79 are positioned close to the floor of the compartments. The holes are typically 300 mm in diameter.

An overflow is provided to return excess liquid from the sludge tank to the first primary settlement tank 12.

Each compartment 38, 40, 42 of the sludge storage tank is fitted with a scum removal valve 80 communicating with the adjacent primary settlement tank; the first compartment 38 actually has two valves because it is adjacent to the first primary settlement tank 12 on which most scum is likely to accumulate. When the storage tank is emptied the valve 80 is opened to allow a cascade to flow from the primary settlement tank 12, 14, 16 which draws off floating scum. The scum removal valves 80 also allow fluid to overflow from the sludge storage tank into the primary settlement tanks 12, 16, 20 in the event of over pumping by the sludge pumps 44. After emptying, some final effluent from the secondary settlement tank 34 may be passed into the sludge tank so as not to leave sludge exposed.

The sludge storage tank is fitted with decking (not shown) and cutouts provide access to operate the scum removal valves 80. Couplings 82 to remove the sludge from the storage tank extend above the decking.

Such a treatment plant lends itself to being constructed on a modular basis each module providing a primary settlement tank, a biozone tank and rotary contactor unit, and a sludge storage compartment. In this way the most appropriate number of primary and biozone tanks and sludge storage compartments can be selected for a particular installation, and the plant can then be constructed by combining the appropriate number of modules together with an appropriately sized secondary settlement tank. The modules described are typically individually of about 140 population capacity (or about 88 if nitrifying). A two-module plant would therefore give a plant capacity of around 280, while a three-module unit would give a capacity of 420 population.

The design of the three-module plant described above was based on the following specification:

| | | |
|---|---|---|
| 1) | Population | 420 |
| 2) | Total Sewage Volume | 180 litres/head/day |
| 3) | Solids Volume | 1.5 litres/head/day |
| 4) | Trade | 0 |
| 5) | Infiltration | 25m³/day |
| 6) | B.O.D. Loading | 0.06 Kg/head/day |
| 7) | Percentage of B.O.D. removed in Primary Settlement. | 30% |
| 8) | Maximum Container Disc Loading | 4g BOD/m²/day |
| 9) | Primary retention at 6 x D.W.F. | 1.33 hrs |
| 10) | Biozone Retention at 3 x D.W.F. | 2hrs. |
| 11) | Secondary upward flow at 6 x D.W.F. | 1m/hr |

where B.O.D. is biochemical oxygen demand and D.W.F. is dry weather flow.

## Claims

1. Waste water treatment plant of the kind providing a first treatment stage in which an initial separation between liquid and solid constituents of the waste water is effected in one or more primary settlement tanks (12, 14, 16), and a second stage in which rotary contactors (28, 30) mounted over the one or more primary settlement tanks are employed to enable biomass to be exposed alternately to the waste water and to air for digestion of pollutants from the waste water by microorganisms, characterised in that the plant further comprises one or more permanently-sited sludge tanks (38, 40, 42) positioned adjacent to the one or more settlement tanks and conveying means (44) interconnecting the settlement and sludge tanks whereby sludge which settles within the one or more primary settlement tanks becomes transferred to the one or more sludge tanks.

2. Plant according to claim 1 in which the conveying means comprises one or more pumps (44).

3. Plant according to either of claims 1 and 2 in which benching (36) within the primary settlement tanks (12, 14, 16) is arranged to encourage the sludge to collect in one or more collection zones of the tanks.

4. Plant according to any preceding claim in which the rotary contactors (28, 30) are accommodated within two or more biozone tanks (22, 24, 26) within upper portions of respective primary settlement tanks (16, 14, 12), the flow of waste water through the biozone tanks in the second stage of treatment being in the opposite direction to flow through the successive primary settlement tanks in the first stage of treatment.

5. Plant according to claim 4 in which each primary settlement tank (12, 14, 16), with its associated biozone tank (26, 24, 22) and rotary contactor (28, 30), is one element of a modular construction which enables any chosen plurality of such elements to be coupled together in series to provide plant of a required capacity.

6. Plant according to claim 5 in which each element of the modular construction forms also a sludge tank (38, 40, 42) or a portion of same to which said conveying means (44) can transfer sludge from the associated primary settlement tank.

7. Plant according to any preceding claim which provides for a third stage of treatment in which residual solids are permitted to settle out from the liquid phase of the waste water in one or more secondary settlement tanks (34) after completion of the second stage of treatment.

8. Plant according to any preceding claim which comprises at least two biozone tanks (22,24,26) through which waste water which has been through the first stage passes successively, each tank accommodating an independently driven rotary contactor unit (29,30) mounted to rotate about an axis extending transversely of the overall direction of flow through the tank.

9. A method of operating a waste water treatment plant of the kind providing a first treatment stage in which an initial separation between liquid and solid constituents of the waste water is affected in one or more primary settlement tanks (12, 14, 16), and a second stage in which rotary contactors (28, 30) mounted over the one or more primary settlement tanks are employed to enable biomass to be exposed alternately to the waste water and to air for digestion of pollutants from the waste water by microorganisms, characterised in that in order to facilitate the removal of sludge from the plant and to minimise interference with the process conditions in the one or more settlement tanks, sludge collecting in the one or more settlement tanks is transferred during operation of the plant to one or more permanently-sited sludge tanks positioned adjacent to the one or more settlement tanks to prevent accumulation of the sludge in the one or more settlement tanks, the transferred sludge being stored for subsequent removal from the plant.

## Patentansprüche

1. Wasserbehandlungsanlage der Art, bei der eine erste Behandlungsstufe vorgesehen ist, in der eine einleitende Trennung zwischen flüssigen und festen Bestandteilen des Abwassers in einem oder mehreren Primärabsetzbecken (12, 14, 16) vorgenommen wird, und eine zweite Behandlungsstufe vorgesehen ist, in der Drehkontaktierer (28, 30), die oberhalb des einen oder der mehreren Primärabsetzbecken gelagert sind, dazu verwendet werden, daß die Biomasse abwechselnd dem Abwasser und Luft ausgesetzt wird, um Verunreinigungen aus dem Abwasser durch Mikroorganismen faulen zu lassen,
**dadurch gekennzeichnet,**
daß die Anlage außerdem ein oder mehrere permanent angeordnete Schlammbecken (38, 40, 42) aufweist, die neben dem einen oder den mehreren Absetzbecken angeordnet sind, und eine Fördereinrichtung (44) aufweist, die die Absetz- und Schlammbecken verbindet, wodurch Schlamm, der sich in dem einen oder mehreren Primärabsetzbecken absetzt, in das eine oder die mehreren Schlammbecken transferiert wird.

2. Anlage nach Anspruch 1, bei der die Fördereinrichtung eine oder mehrere Pumpen (44) aufweist.

3. Anlage nach Anspruch 1 oder 2, bei der innerhalb der Primärabsetzbecken (12, 14, 16) eine Bankettierung (36) angeordnet ist, um das Sammeln des Schlamms in einer oder mehreren Sammelzonen der Becken zu fördern.

4. Anlage nach irgendeinem vorhergehenden Anspruch, bei dem die Drehkontaktierer (28, 30) innerhalb zweier oder mehrerer Biozonenbecken (22, 24, 26) in oberen Bereichen der jeweiligen Primärabsetzbecken (16, 14, 12) aufgenommen sind, wobei der Abwasserfluß durch die Biozonenbecken in der zweiten Behandlungsstufe dem Fluß durch die aufeinanderfolgenden Primärabsetzbecken in der ersten Behandlungsstufe entgegengerichtet ist.

5. Anlage nach Anspruch 4, bei der jedes Primärabsetzbecken (12, 14, 16) mit dem dazugehörigen Biozonenbecken (26, 24, 22) und Drehkontaktierer (28, 30) ein Element mit modularem Aufbau ist, wodurch ermöglicht wird, eine beliebige Mehrzahl derartiger Elemente in Reihe zu koppeln, um eine Anlage erforderlicher Kapazität zu schaffen.

6. Anlage nach Anspruch 5, bei der jedes Element des modularen Aufbaus außerdem ein Schlammbecken (38, 40, 42) oder einen Teil desselben bildet, zu dem die Fördereinrichtung (44) Schlamm aus dem zugehörigen Primärabsetzbecken transferieren kann.

7. Anlage nach irgendeinem vorhergehenden Anspruch, die eine dritte Behandlungsstufe vorsieht, in der restliche Feststoffe sich aus der Flüssigphase des Abwassers in einem oder mehreren Sekundärabsetzbecken (34) absetzen können, nachdem die zweite Behandlungsstufe abgeschlossen ist.

8. Anlage nach irgendeinem vorhergehenden Anspruch, umfassend mindestens zwei Biozonenbecken (22, 24, 26), durch die Abwasser, welches die erste Stufe passiert hat, sukzessive hindurchläuft, wobei jedes Becken eine unabhängig angetriebene Drehkontaktiereinheit (29, 30) aufweist, die derart gelagert ist, daß sie sich um eine Achse dreht, die sich quer zu der allgemeinen Strömungsrichtung durch das Becken erstreckt.

9. Verfahren zum Betreiben einer Abwasserbehandlungsanlage der Art, bei der eine erste Behandlungsstufe vorgesehen ist, in der eine einleitende Trennung zwischen flüssigen und festen Bestandteilen des Abwassers in einem oder mehreren Primärabsetzbecken (12, 14, 16) vorgenommen wird, und eine zweite Stufe vorgesehen ist, in welcher Drehkontaktierer (28, 30), die oberhalb des einen oder der mehreren Primärabsetzbecken gelagert sind, dazu dienen, die Biomasse abwechselnd dem Abwasser und Luft auszusetzen, um Verunreinigungen aus dem Abwasser durch Mikroorganismen verfaulen zu lassen,
**dadurch gekennzeichnet**,
daß zum Erleichtern des Abziehens von Schlamm aus der Anlage und zur Minimierung der Beeinträchtigung anderer Prozeßbedingungen in dem einen oder den mehreren Absetzbecken, zusammenlaufender Schlamm in dem einen oder den mehreren Absetzbecken während des Betriebs der Anlage zu einem oder mehreren permanent angeordneten Schlammbecken transferiert wird, die benachbart zu dem einen oder den mehreren Absetzbecken angeordnet sind, um eine Ansammlung des Schlamms in dem einen oder den mehreren Absetzbecken zu verhindern, wobei der transferierte Schlamm zur späteren Entfernung aus der Anlage gespeichert wird.

## Revendications

1. Installation de traitement d'eaux usées du type prévoyant une première étape de traitement dans laquelle une séparation initiale entre les constituants liquides et solides de l'eau usée est effectuée dans une ou plusieurs cuves de décantation primaire (12,14,16), et une seconde étape dans laquelle des contacteurs rotatifs (28,30) montés au-dessus de l'une ou plusieurs desdites cuves de décantation primaire sont utilisés pour permettre la mise en contact de la biomasse alternativement avec les eaux usées et avec l'air pour la digestion des polluants des eaux usées par des micro-organismes, caractérisée en ce que l'installation comporte en outre un ou plusieurs réservoirs de boue (38,40,42) ayant une position fixe, disposés à côté desdites une ou plusieurs cuves de décantation, et des moyens de convoyage (44) reliant les cuves de décantation et les réservoirs de boue, de sorte que la boue qui se dépose à l'intérieur d'une ou de plusieurs cuves de décantation primaire, est transférée vers lesdits un ou plusieurs réservoirs de boue.

2. Installation selon la revendication 1, dans laquelle les moyens de convoyage comportent une ou plusieurs pompes.

3. Installation selon la revendication 1 ou la revendication 2, dans laquelle des gradins (36) à l'intérieur des cuves de décantation primaire (12,14,16) sont disposés de façon à entraîner la boue à se collecter dans une ou plusieurs zones de collecte des cuves.

4. Installation selon l'une quelconque des revendications précédentes, dans laquelle les contacteurs rotatifs (28,30) sont disposés dans deux ou plusieurs cuves à biozone (22,24,26) dans des parties supérieures de cuves de décantation respectives (16,14,12), le flux d'eaux usées à travers les cuves à biozone pendant la seconde phase de traitement ayant lieu en direction opposée du flux à travers les cuves de décantation primaire successives pendant la première phase de traitement.

5. Installation selon la revendication 4, dans laquelle chaque cuve de décantation primaire (12,14,16), avec sa cuve à biozone (26,24,22) et son contacteur rotatif (28,30) associés, constitue l'un des éléments d'une construction modulaire qui permet à une pluralité quelconque choisie de tels éléments d'être reliés ensemble en série pour réaliser une installation d'une capacité requise.

6. Installation selon la revendication 5, dans laquelle chaque élément de la construction modulaire forme également un réservoir à boue (38,40,42) ou une partie de celui-ci, vers lequel lesdits moyens de convoyage (44) peuvent transférer de la boue provenant de la cuve de décantation primaire associée.

7. Installation selon l'une quelconque des revendications précédentes, comportant une troisième étape de traitement dans laquelle des solides résiduels sont autorisés à se déposer à partir de la phase liquide des eaux usées, dans une ou plusieurs cuves de décantation secondaire (34) après la fin de la seconde étape de traitement.

8. Installation selon l'une quelconque des revendications précédentes, comportant au moins deux cuves à biozone (22,24,26) à travers lesquelles passent successivement des eaux usées qui ont traversé la première étape, chaque cuve comportant une unité de contacteur rotatif (29,30) entraînée de façon indépendante, montée de manière à tourner autour d'un axe s'étendant transversalement par rapport à la direction générale du flux à travers la cuve.

9. Procédé de mise en oeuvre d'une installation de traitement des eaux usées du type prévoyant une première étape de traitement dans laquelle une séparation initiale entre les constituants liquides et solides des eaux usées est effectuée dans une ou plusieurs cuves de décantation primaire (12,14,16), et une seconde étape dans laquelle des contacteurs tournants (28,30) montés au-dessus de l'une ou plusieurs desdites cuves de décantation primaire sont utilisés pour permettre la mise en contact de la biomasse alternativement avec les eaux usées et avec l'air pour la digestion des polluants des eaux usées par des micro-organismes, caractérisé en ce que pour faciliter l'enlèvement de la boue de l'installation et de minimiser l'interférence avec les conditions de traitement dans l'une ou plusieurs desdites cuves de décantation, la boue se collectant dans l'une ou plusieurs desdites cuves de décantation est transférée pendant le fonctionnement de l'installation vers un ou plusieurs réservoirs de boue de position fixe disposés à côté desdites une ou plusieurs cuves de décantation, la boue transférée étant stockée pour être enlevée ultérieurement de l'installation.
